# EUROPEAN PATENT APPLICATION

(11) **EP 4 686 142 A2**
(43) Date of publication of application: **28.01.2026**
(21) Application number: 25190432.2
(22) Date of filing: 18.07.2025
(51) Int. Cl.: H04L 9/08, G06F 9/455

(54) **VIRTUALIZING DISCRETE AND MIGRATABLE TRUSTED PLATFORM MODULES (TPMS)**

(30) Priority: 26.07.2024 US 202418785740
(71) Applicant: Microsoft Technology Licensing, LLC, Redmond, WA 98052 (US)
(72) Inventor: KHARE, Atul, Redmond, 98052-6399 (US); KOTARY, Karunakara, Redmond, 98052-6399 (US)
(74) Representative: CMS Cameron McKenna Nabarro Olswang LLP

(57) **Abstract**

Systems and methods are provided for implementing virtualization of discrete and migratable cryptographic processors (e.g., trusted platform modules ("TPMs")). In examples, an orchestrator in a control plane causes migration of a first cryptographic processor emulator (e.g., a TPM emulator) that has been instantiated on a first platform root of trust ("PROT") to a second PROT, by requesting secret data (e.g., an endorsement seed associated with the cryptographic processor emulator, sealed secrets, etc.) stored in a first memory in the first PROT. The orchestrator receives the secret data, instantiates a second cryptographic processor emulator on the second PROT based on the secret data, and transfers the secret data to a second memory in the second PROT. The orchestrator instructs the cryptographic processor emulator on the first PROT to delete the secret data from the first memory, and sends a status of the migration to a requesting device that requested the migration.

## Description

### BACKGROUND

Trusted platform modules ("TPMs") are becoming an increasingly important part of the data center computing landscape, and are being used for remote attestation, key management, cryptographic operations, and so forth. It is with respect to this general technical environment to which aspects of the present disclosure are directed. In addition, although relatively specific problems have been discussed, it should be understood that the examples should not be limited to 0solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for virtualizing discrete and migratable secure cryptographic processors (e.g., TPMs). In examples, an orchestrator in a control plane causes migration of a cryptographic processor emulator (e.g., a TPM emulator) that has been instantiated on a first platform root of trust ("PROT") to a second PROT, e.g., in response to a request from a requesting device. The migration is performed by the orchestrator first establishing mutual trust with the first PROT, and then requesting secret data (e.g., an endorsement seed associated with the cryptographic processor emulator, an endorsement key generated using the endorsement seed, and/or sealed secrets encrypted using the endorsement key) that is stored in a memory in the first PROT. The orchestrator receives the secret data (in encrypted form), decrypts the secret data, instantiates another cryptographic processor emulator on the second PROT based on the secret data, and transfers the secret data to a memory in the second PROT. With the endorsement seed, the other cryptographic processor emulator can generate keys that the cryptographic processor emulator on the first PROT can generate, thus effectively migrating the cryptographic processor emulator from the first PROT to the second PROT. The orchestrator subsequently instructs the cryptographic processor emulator on the first PROT to delete the secret data from the memory in the first PROT, and sends a status of the migration to the requesting device.

Systems and methods are provided for implementing virtualization of discrete and migratable cryptographic processors (e.g., trusted platform modules ("TPMs")). In examples, an orchestrator in a control plane causes migration of a first cryptographic processor emulator (e.g., a TPM emulator) that has been instantiated on a first platform root of trust ("PROT") to a second PROT, by requesting secret data (e.g., an endorsement seed associated with the cryptographic processor emulator, sealed secrets, etc.) stored in a first memory in the first PROT. The orchestrator receives the secret data, instantiates a second cryptographic processor emulator on the second PROT based on the secret data, and transfers the secret data to a second memory in the second PROT. The orchestrator instructs the cryptographic processor emulator on the first PROT to delete the secret data from the first memory, and sends a status of the migration to a requesting device that requested the migration.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing virtualization of discrete and migratable cryptographic processors (e.g., TPMs).
Figs. 2A and 2B depict various example sequence flows for implementing virtualization of discrete and migratable TPMs.
Fig. 3 depicts an example method for implementing virtualization of discrete and migratable cryptographic processors.
Fig. 4 depicts another example method for implementing virtualization of discrete and migratable TPMs.
Fig. 5 depicts a block diagram illustrating example physical components of a computing device with which aspects of the technology may be practiced.

### DETAILED DESCRIPTION OF CERTAIN EMBODIMENTS

As briefly discussed above, TPMs are becoming an increasingly important part of the data center computing landscape, and are being used for remote attestation, key management, cryptographic operations, among other functions. In a virtualized environment, a hypervisor can expose virtual TPMs ("vTPMs") to virtual machines ("VMs"). However, on bare metal platforms that do not run a hypervisor, a vTPM is not a viable option. In such cases, the only recourse is to use a physical TPM (also referred to as "discrete TPM" or "dTPM"), but exposing such a device to a bare metal guest OS entails several issues, such as tying the bare metal guest to a specific discrete TPM part, and/or the need to scrub cryptographic secrets and non-volatile storage after the bare metal guest terminates. Firmware-TPMs ("fTPMs") are also not a viable alternative because they too are rooted to platform silicon. The manufacturing process for fTPMs also injects the private portion of the endorsement key into a secure location in the silicon, thereby placing similar restrictions on migration.

The present technology provides for virtualizing discrete and migratable secure cryptographic processors (e.g., TPMs). In particular, the present technology exposes a discrete cryptographic processor (e.g., TPM) to a bare metal guest, except that the "physical device" is virtualized by a combination of hardware and software (referred to herein as a "TPM emulator" or, more broadly, as a "cryptographic processor emulator"). This is possible because the cryptographic processor emulator is a passive device that uses serialized traffic (e.g., TPM traffic or cryptographic processor traffic) over a serial bus, such as an inter-integrated circuit ("I2C") bus or a serial peripheral interface ("SPI") bus. In examples, all cryptographic processor commands (e.g., TPM commands from a sending device) to the cryptographic processor emulator are sent as a stream of bytes (e.g., as the serialized traffic) sent over the serial bus, after which the sending device (e.g., a TPM client or a cryptographic processor client) polls for command completion. Once the cryptographic processor emulator signals that the cryptographic processor command has been completed, the response is sent back as a stream of bytes.

In operation, the physical wires for the serial bus can be routed to a PROT, and if there is a device at the other end of the serial bus to read the traffic (e.g., a buffer or a dummy I2C/SPI device), the serialized traffic (including the cryptographic processor commands) from the sending device can be captured. The serialized traffic is then fed into a software cryptographic processor emulator (e.g., a TPM emulator) running on the PROT to interpret and process the cryptographic processor commands. After processing, the cryptographic processor emulator writes the response back on the serial bus, and as far as the cryptographic processor client is concerned, the request and response are coming from an actual physical discrete TPM or cryptographic processor. Since the state of the cryptographic processor is being completely maintained by the cryptographic processor emulator, concerns related to exposing physical discrete TPMs can be addressed. For example, the control plane can easily migrate the bare metal guest or the cryptographic processor emulator (e.g., TPM emulator) to another node by retrieving the emulated state and restoring it on a new emulation platform. Similarly, firmware updates and scrubbing of guest secrets becomes a non-issue because the secrets are not tied to a physical discrete TPM.

In sum, the present technology provides a cryptographic processor emulator (e.g., TPM emulator) with the following properties or features: (1) Is tied to PROT; (2) Does not require use of a hypervisor or any other software enlightenments on a host operating system; (3) Is not tied to the hardware (e.g., silicon components such as a motherboard) for a particular node (i.e., is easily migratable); (4) Supports easy updates of cryptographic processor firmware (e.g., TPM firmware) without loss of associated secrets; and (5) Enables trivial scrubbing of secrets.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

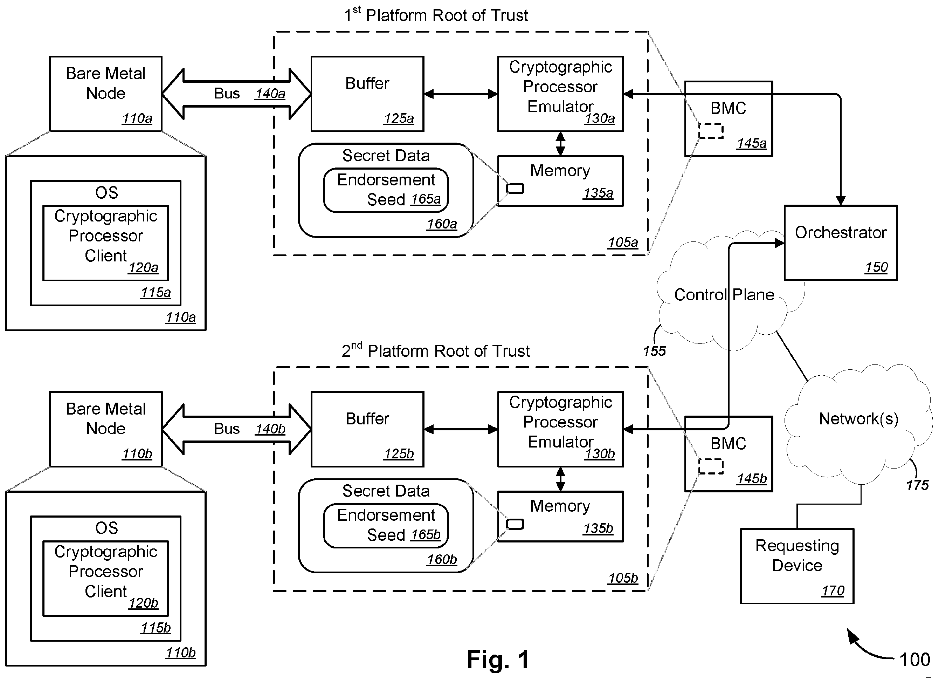

Turning to the embodiments as illustrated by the drawings, Figs. 1-5 illustrate some of the features of methods, systems, and apparatuses for implementing virtualization of discrete and migratable cryptographic processors, and, more particularly, to methods, systems, and apparatuses for implementing virtualization of discrete and migratable TPMs, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing virtualization of discrete and migratable cryptographic processors (e.g., TPMs). System 100 includes a first PROT 105a, a bare metal node 110a, an operating system ("OS") 115a running on the bare metal node 110a, a cryptographic processor client 120a hosted on the OS 115a, a buffer 125a, a cryptographic processor emulator 130a, a memory 135a, a bus 140a, and a baseboard management controller ("BMC") 145a. The system 100 further includes an orchestrator 150 in a control plane 155. The buffer 125a, the cryptographic processor emulator 130a, and the memory 135a are part of, instantiated on, or disposed in the first PROT 105a. The bus 140a communicatively couples the bare metal node 110a and the buffer 125a (as depicted in Fig. 1 by a double-headed block arrow between these two components). The cryptographic processor emulator 130a communicatively couples with each of the buffer 125a and the memory 135a (as depicted in Fig. 1 by the corresponding double-headed arrows between the cryptographic processor emulator 130a and each of these components). Stored in the memory 135a is secret data 160a associated with the cryptographic processor emulator 130a. The secret data 160a, in some cases, includes an endorsement seed 165a that corresponds to the cryptographic processor emulator 130a, a key(s) (e.g., an endorsement key(s) or other key(s)) generated using the endorsement seed, and/or sealed secrets that are encrypted using the key(s) derived from the endorsement seed 165a. The BMC 145a communicatively couples the cryptographic processor emulator 130a of the first PROT 105a with the orchestrator 150 in the control plane 155 (as depicted in Fig. 1 by a double-headed arrow between the cryptographic processor emulator 130a and the orchestrator 150, through the BMC 145a).

System 100 further includes a second PROT 105b, a bare metal node 110b, an OS 115b running on the bare metal node 110b, a cryptographic processor client 120b hosted on the OS 115b, a buffer 125b, a cryptographic processor emulator 130b, a memory 135b, a bus 140b, and a BMC 145b. The buffer 125b, the cryptographic processor emulator 130b, and the memory 135b are part of, instantiated on, or disposed in the second PROT 105b. The bus 140b communicatively couples the bare metal node 110b and the buffer 125b (as depicted in Fig. 1 by a double-headed block arrow between these two components). The cryptographic processor emulator 130b communicatively couples with each of the buffer 125b and the memory 135b (as depicted in Fig. 1 by the corresponding double-headed arrows between the cryptographic processor emulator 130b and each of these components). Stored in the memory 135b is secret data 160b associated with the cryptographic processor emulator 130b. The secret data 160b, in some cases, includes an endorsement seed 165b that corresponds to the cryptographic processor emulator 130b, a key(s) (e.g., an endorsement key(s) or other key(s)) generated using the endorsement seed, and/or sealed secrets that are encrypted using the key(s) derived from the endorsement seed 165b. The BMC 145b communicatively couples the cryptographic processor emulator 130b of the second PROT 105b with the orchestrator 150 in the control plane 155 (as depicted in Fig. 1 by a double-headed arrow between the cryptographic processor emulator 130b and the orchestrator 150, through the BMC 145b). System 100 further includes a requesting device 170 and network(s) 175, the orchestrator 150 communicatively coupling with requesting device 170 via network(s) 175 and control plane 155. In examples, the control plane 155 includes a private network, a service provider network, or a cloud network. In some examples, the requesting device 170 is one of a computing system of a service provider agent, a computing system of a technician, or a computing system of an end-user, each of these computing systems including one of a network terminal client computer, a cloud network management computer, a desktop computer, a laptop computer, a tablet computer, a smart phone, or a mobile phone. In examples, network(s) 175 each includes at least one of a distributed computing network, such as the Internet, a private network, a commercial network, or a cloud network.

The cryptographic processor emulators 130a and 130b are instantiated virtual cryptographic processors that perform functions of physical or chip-based cryptographic processors, without using a hypervisor or hypervisor-controlled VMs. The functions including performing cryptographic operations. In examples, the cryptographic operations include generating and storing at least parts of cryptographic keys (e.g., encryption, decryption, and/or symmetric keys) for computing systems, limiting use of the cryptographic keys, performing device authentication, storing security measurements of the boot process, and/or other system security functions. In some examples, the cryptographic processor emulators 130a and 130b each includes a TPM emulator, rather than a hardware-based TPM chip, that performs the cryptographic operations. In various examples, the TPM emulator performs two main functions among the cryptographic operations described above, namely: secure key generation (e.g., generating cryptographic keys) and remote system attestation (e.g., performing device authentication). For secure key generation, the TPM emulator securely generates new cryptographic keys that are available only to the TPM emulator, where the private key material never leaves the device in plain form (e.g., in unencrypted form). The TPM emulator also performs secondary cryptographic functions such as encryption and signing, as well as certifying new keys. Trust in the generated keys is rooted in a primary key provisioned by a manufacturer or owner of the TPM emulator. For remote system attestation, the TPM emulator stores a sequence of measurements (e.g., security measurements) in a special set of registers called platform configuration registers ("PCRs"). When the TPM emulator later reports its PCR values (e.g., to a remote attester) in a secure manner, and the remote attestor is able to verify that the report is current, authentic, and has not been tampered with.

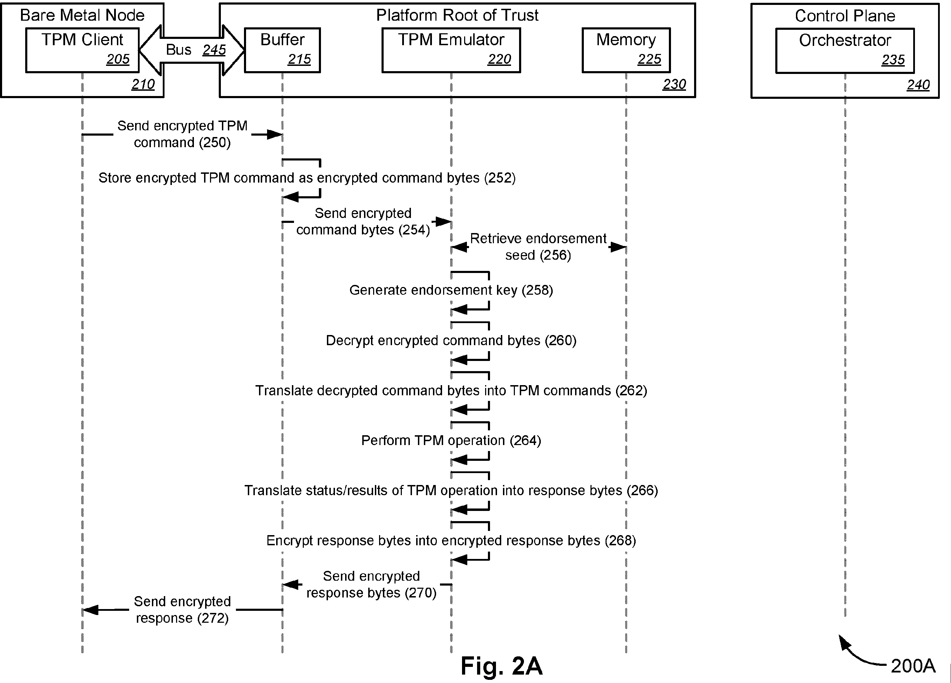

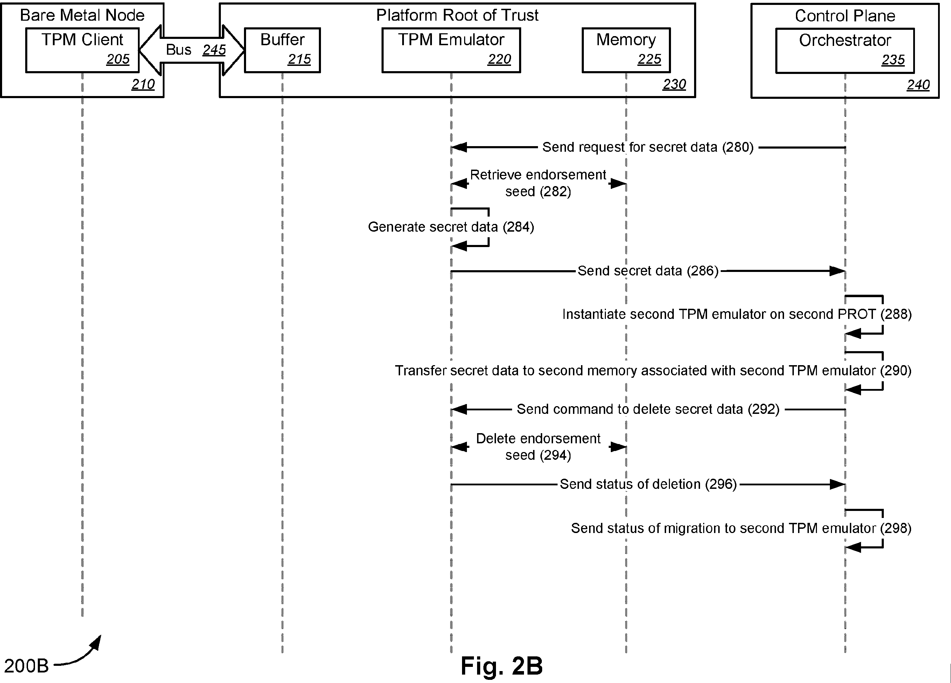

As used herein, a PCR refers to a register or memory location in a cryptographic processor emulator (in this case, cryptographic processor emulator 130a or 130b, or TPM emulator 220 of Fig. 2) that stores a value (e.g., integrity measurements of code (e.g., a software state) running on a system). The size of the value that can be stored in a PCR is determined by a size of a digest that is generated by an associated hashing algorithm (e.g., secure hashing algorithm ("SHA") -1 or SHA-256). Multiple PCRs associated with the same hashing algorithm are referred to as a PCR bank. In examples, the cryptographic processor emulator 130a or 130b (or TPM emulator 220 of Fig. 2) includes at least one PCR bank of at least 24 PCRs, each capable of storing at least 20 bytes of data (e.g., corresponding to the size of a SHA-1 digest). To store a new value in a PCR, the existing value in the PCR is extended with a new value. In an example, before extension, PCR #5 includes the following:
PCR[5]:sha1=af4984de0ffe173c5e02cccedb640febca09d742.

After extension, PCR #5 includes the following:
PCR[5]:sha1=af4984de0ffe173c5e02cccedb640febca09d742, sha256= ff78ab24cd3a95bbe0ffa138d1f79a2a13bef13a35082cea2a3f87ac2d0e99ab.

In some examples, the values that are stored in the PCRs include values associated with a static root of trust for measurement ("SRTM"), a basic input/output system ("BIOS"), host platform extensions, an embedded-option read-only memory ("ROM"), platform initialization ("PI") drivers, a host platform configuration, a unified extensible firmware interface ("UEFI") driver and application code, a UEFI driver and application configuration and data, a UEFI boot manager code and boot attempts, a boot manager code configuration and data, a globally unique identifier ("GUID") partition table ("GPT"), host platform manufacturer specific information, secure boot policy, static OS use information, and/or debug information.

In examples, the cryptographic processor clients 120a and 120b send cryptographic processor commands (or TPM commands where TPM emulators are used) to the cryptographic processor emulators 130a and 130b, respectively, via a corresponding one of bus 140a and buffer 125a or bus 140b and buffer 125b. The cryptographic processor commands include commands to encrypt (or seal) data or keys, commands decrypt (or unseal) data or keys, commands to extend a PCR, or commands to store nonvolatile secrets. The bare metal nodes 110a and 110b are hypervisor-less nodes that are different from VM-based, hypervisor-centric nodes. That is, rather than a vTPM that is dedicated to each VM on a host machine, where a hypervisor creates and runs the VMs, the various examples described herein are directed to systems that run on bare metal, non-virtualized (i.e., hypervisor-less) systems. A VM, as used herein, refers to a virtual computer system that emulates the functionality of a physical computer. The cryptographic processor emulators or TPM emulators described herein emulate the function of physical TPMs and vTPMs without being chip-based (and thus linked intrinsically to a physical device) and without using hypervisor-based virtualization (e.g., using VMs).

The buses 140a and 140b are each one of an I2C bus, an SPI bus, or other serial bus. The I2C bus is a two-wire serial protocol -based bus that is used to communicate between two devices or chips, and has one line for clock signals and another line for data. The SPI bus is a four-wire serial communication protocol -based bus that has four lines, one for a serial clock signal used for data communication, one to select a secondary device, one for an output data line from a primary device, and the last for an input data line to the primary device. The memories 135a and 135b are each either a nonvolatile memory, a volatile memory, or a combination of different memory devices (some volatile, others non-volatile). The volatile memory includes random access memory ("RAM") -based memory, the use of which enables easy scrubbing of secret data at the risk of losing the secret data upon power loss. The nonvolatile memory includes flash memory or electrically erasable programmable read-only memory ("EEPROM"), the use of either of which ensures secret data is not lost upon power loss.

In examples, the BMCs 145a and 145b, in general, each enables remote control, management, and monitoring of hardware systems, and performs tasks including power cycling, configuring BIOS, and/or making firmware updates, while also monitoring critical sensors, such as temperature and fan speeds. The BMCs 145a and 145b also perform virtual media support that enable administrators to remotely mount International Organization for Standardization ("ISO") images, disk images, and other media types to the system (in this case, the bare metal nodes 110a and 110b, respectively). As used herein, an ISO image is a disk image that contains contents that are written to an optical disc, disc sector by disc sector. In examples, the contents include a binary image of an optical media file system, corresponding file system extensions, and data that is structured according to the file system. The BMCs 145a and 145b each also provides a separate management interface that is isolated from the main OS, the separate management interface being used to limit access to critical system management functions, such as the functions of the cryptographic processor emulators 130a and 130b, as described above. In examples, each of the BMC 145a and 145b is either a single-node BMC that communicatively couples to a single bare metal node (e.g., bare metal node 110a or 110b) or a dual-node BMC that communicatively couples to two bare metal nodes (one of which is bare metal node 110a or 110b). In an example, the first and second PROTs 105a and 105b are established on the BMCs 145a and 145b, respectively (as shown in Fig. 1). Alternatively, in another example, each of the first and second PROTs 105a and 105b is established on a motherboard on which the cryptographic processor client 120a or 120b is running (e.g., on the bare metal node 110a or 110b).

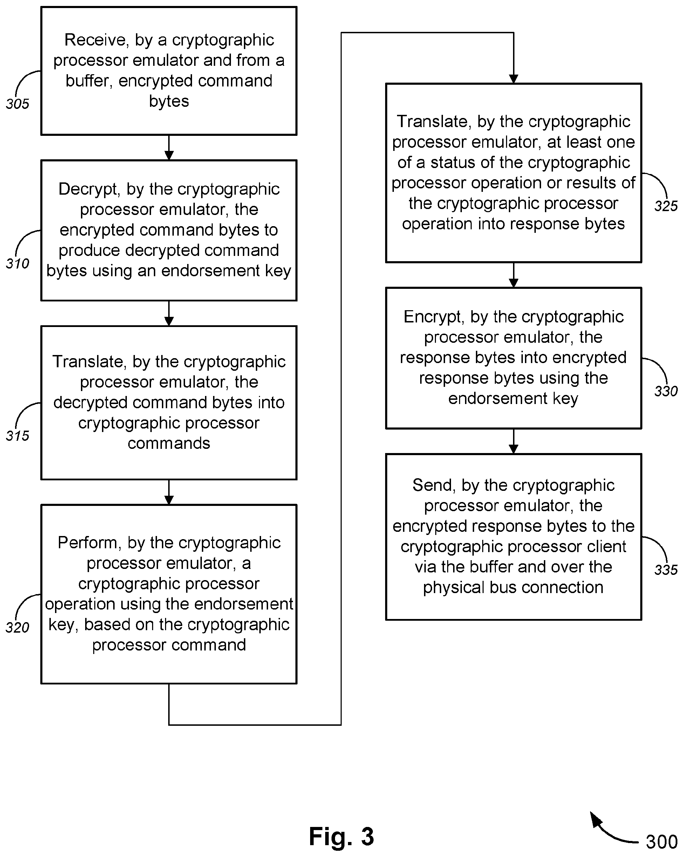

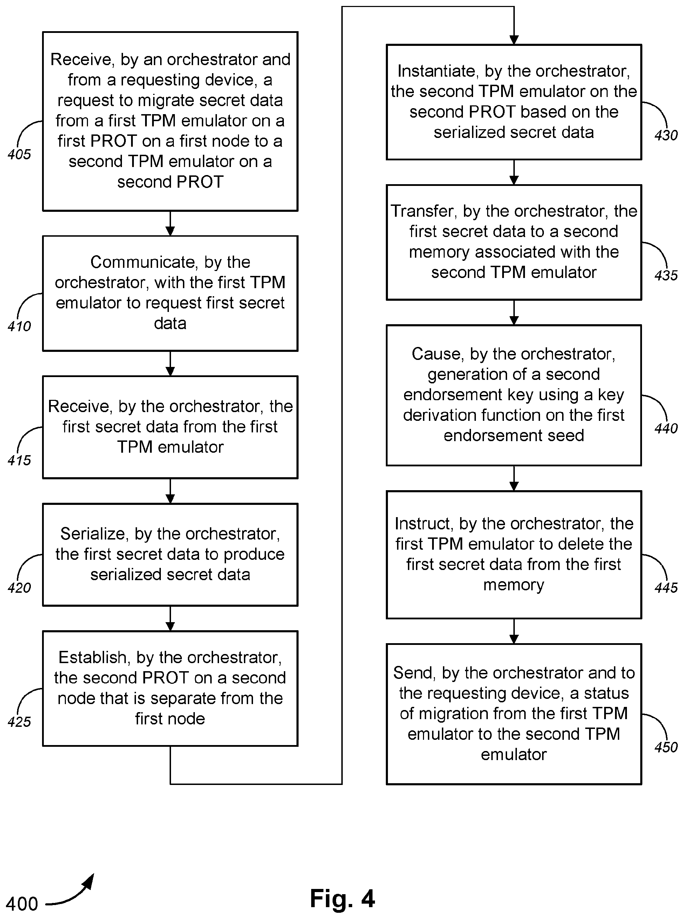

In operation, cryptographic processor emulator(s) 130a or 130b and/or orchestrator 150 may perform methods for implementing virtualization of discrete and migratable cryptographic processors (e.g., TPMs), as described in detail with respect to Figs. 2A-4. For example, example sequence flows 200A and 200B as described below with respect to Figs. 2A and 2B, and methods 300 and 400 as described below with respect to Figs. 3 and 4 may be applied with respect to the operations of system 100 of Fig. 1.

In some aspects, a control plane (or a orchestrator in the control plane (e.g., orchestrator 150 in control plane 155)) generates seeding material (e.g., endorsement seed 165a), and transmits it to a PROT (e.g., PROT 105a) when a node (e.g., bare metal node 110a) is assigned to a bare metal guest (e.g., cryptographic processor client 120a). If the bare metal guest is migrated to another node (e.g., bare metal node 110b), the control plane (or the orchestrator) recreates the same endorsement certificate on the TPM in the PROT for the new node (e.g., cryptographic processor emulator 130b in PROT 105b for bare metal node 110b). All bare metal sealed secrets are encrypted using keys derived from a per-TPM seeding material. Because the key derivation is deterministic given an initial seeding material, the control plane (or the orchestrator) can ensure that there is no loss of sealed secrets by sending/migrating the per-TPM seeding material. In examples, the control plane (or the orchestrator) can also trivially migrate data in a first non-volatile storage, and can discard all data from the first non-volatile storage, after migration, when the bare metal guest is terminated. The cryptographic processor emulator ensures that no secrets are lost in the event of firmware updates, e.g., by enabling copying or migration of the secrets prior to firmware updates being initiated and restoring if necessary after completion of the firmware updates.

Figs. 2A and 2B depict various example sequence flows 200A and 200B for implementing virtualization of discrete and migratable TPMs. The example sequence flows 200A and 200B include processes performed by at least one of a TPM client 205 hosted on a bare metal node 210, a buffer 215, a TPM emulator 220, and a memory 225 of a PROT 230, and/or an orchestrator 235 of a control plane 240. In some examples, the TPM client 205 communicates with the buffer 215 via bus 245. In examples, the TPM client 205, the bare metal node 210, the buffer 215, the TPM emulator 220, the memory 225, the PROT 230, the orchestrator 235, the control plane 240, and the bus 245 of Figs. 2A and 2B may be similar, if not identical, to the cryptographic processor client 120a or 120b, the bare metal node 110a or 110b, the buffer 125a or 125b, the cryptographic processor emulator 130a or 130b, the memory 135a or 135b, the PROT 105a or 105b, the orchestrator 150, the control plane 155, and the bus 140a or 140b, respectively, of system 100 of Fig. 1, and the description of these components of system 100 of Fig. 1 are similarly applicable to the corresponding components of Figs. 2A and 2B.

Referring to example sequence flow 200A of Fig. 2A, at operation 250, the TPM client 205 (hosted on bare metal node 210) sends an encrypted TPM command to the buffer 215 via a physical bus connection (e.g., bus 245). At operation 252, the buffer 215 (in PROT 230) stores the encrypted TPM command as encrypted command bytes. At operation 254, the buffer 215 sends the encrypted command bytes to the TPM emulator 220 (in PROT 230). At operation 256, the TPM emulator 220 retrieves, from memory 225 (in PROT 230), an endorsement seed associated with TPM emulator 220. As used herein, the endorsement seed (also called "seeding material") refers to an entropy value (or randomly generated or randomly occurring value) from which all keys associated with the TPM emulator are derived. For instance, the entropy value is used to generate an endorsement key that is in turn used as a primary encryption key when performing TPM operations on the TPM emulator 220. At operation 258, the TPM emulator 220 generates an endorsement key based on the endorsement seed. In examples, the endorsement seed is injected into the TPM emulator 220 when the TPM emulator 220 is initially instantiated by the orchestrator 235 on the PROT 230. Where TPM emulator 220 of the various embodiments herein differ from physical TPMs is that TPM emulator 220 is migratable. That is, so long as the control plane 240 (or orchestrator 235 therein) knows the initial random entropy, all subsequent secrets in the platform can be derived from it. In this way, a new TPM emulator can be instantiated on a different machine using the endorsement seed of TPM emulator 220 to clone the TPM emulator on the different machine (as shown and described below with respect to example sequence flow 200B of Fig. 2B).

Turning back to the example sequence flow 200A of Fig. 2A, the TPM emulator 220 decrypts the encrypted command bytes, using the endorsement key, to produce decrypted command bytes (at operation 260), translates the decrypted command bytes into TPM commands (at operation 262), and performs a TPM operation using the endorsement key, based on the cryptographic processor commands (at operation 264). In examples, the TPM commands include commands to encrypt data or keys, commands to decrypt data or keys, commands to extend a PCR, or commands to store nonvolatile secrets (each of which is described in detail above with respect to Fig. 1).

At operation 266, the TPM emulator 220 translates at least one of a status of the TPM operation or results of the TPM operation into response bytes. In examples, the status type of response includes one of an indication of operation success, an indication of operation failure, or an indication of invalid command. In some examples, the result type of response includes results of a TPM operation corresponding to the TPM commands (e.g., encrypted data or keys, decrypted data or keys, a read out of the extended PCR, or an address location in a nonvolatile data storage system where the secrets are stored). The TPM emulator 220 encrypts the response bytes into encrypted response bytes using the endorsement key (at operation 268). At operations 270 and 272, the TPM emulator 220 sends the encrypted response bytes to the TPM client 205 via the buffer 215 and over the physical bus connection.

Referring to example sequence flow 200B of Fig. 2B, the orchestrator 235 (in the control plane 240) performs migration of secrets of a first TPM emulator (e.g., TPM emulator 220) from a first PROT (e.g., PROT 230) to a second TPM emulator on a second PROT (e.g., cryptographic processor emulator 130b of PROT 105b in Fig. 1). TPMs on conventional non-VM systems (i.e., hypervisor-less systems) are typically implemented as physical (e.g., chip-based) TPMs (e.g., dTPMs) or as platform firmware-based TPMs (e.g., fTPMs), and the TPMs in either case are tied to the physical system (e.g., the corresponding motherboard), and thus migration of secrets to another location is not possible without compromising the TPMs themselves. At least some secrets may remain, which poses a risk of compromised secrets, particularly if the physical device is repurposed for some other task or for some other entity(ies). Migration of secrets as described herein is performed after mutual trust has been established between the orchestrator and the first PROT, in some cases, after receiving a request from a requesting device (e.g., requesting device 170 of Fig. 1) to migrate secrets.

At operation 280, the orchestrator 235 sends a request to the TPM emulator 220 for secret data. At operation 282, the TPM emulator 220 retrieves the endorsement seed from the memory 225. At operation 284, the TPM emulator 220 generates the secret data, based on the endorsement seed. In some examples, the secret data includes the endorsement key, an encrypted version of the endorsement seed itself, and/or sealed secrets. At operation 286, the TPM emulator 220 sends the secret data to the orchestrator 235. In examples, the TPM emulator 220 serializes the secret data to produce serialized secret data, and then sends the serialized secret data to the orchestrator 235. As used herein, "serialize" or "serialization" refers to a process of translating a data structure or object into a format that can be stored or transmitted, and reconstructed later, e.g., in a different computing environment.

At operation 288, the orchestrator 235 instantiates the second TPM emulator on the second PROT, based on the secret data (or the serialized secret data). At operation 290, the orchestrator 235 transfers the secret data (or the serialized secret data) to a second memory associated with the second TPM emulator. In the case that the serialized secret data was sent, deserialization (i.e., extraction of the data structure from a series of bytes associated with the serialized secret data) is performed before use or storage on the second PROT. At operation 292 the orchestrator 235 sends a command to the TPM emulator 220 instructing the TPM emulator 220 to delete the secret data from the memory 225. At operation 294, the TPM emulator 220 deletes the endorsement seed from the memory 225, and sends a status of deletion to the orchestrator 235 (at operation 296). At operation 298, the orchestrator 235 sends, to the requesting device, a status of migration of the secret data from the first TPM emulator to the second TPM emulator.

These and other functions of the examples 200A and 200B (and their components) are described in greater detail herein with respect to Figs. 1, 3, and 4.

Fig. 3 depicts an example method 300 for implementing virtualization of discrete and migratable cryptographic processors. In examples, the operations of example method 300 may be performed by a cryptographic processor emulator (e.g., cryptographic processor emulator 130a or 130b of Fig. 1 or TPM emulator 220 of Figs. 2A and 2B).

In the example method 300 of Fig. 3, at operation 305, a cryptographic processor emulator receives encrypted command bytes from a buffer (e.g., buffer 125a, 125b, or 215 of Figs. 1 or 2A-2B). In examples, the encrypted command bytes are sent by a cryptographic processor client running on an OS of the hypervisor-less bare metal node (e.g., cryptographic processor client 120a or 120b running on OS 115a or 115b of bare metal node 110a or 110b of Fig. 1, or TPM client 205 running on bare metal node 210 of Figs. 2A and 2B) over a physical bus connection (e.g., bus 140a/140b or 245 of Figs. 1 or 2A-2B).

At operation 310, the cryptographic processor emulator decrypts the encrypted command bytes to produce decrypted command bytes using an endorsement key corresponding to the cryptographic processor emulator. The cryptographic processor emulator, at operation 315, translates the decrypted command bytes into cryptographic processor commands. At operation 320, the cryptographic processor emulator performs a cryptographic processor operation using the endorsement key, based on the cryptographic processor commands. The cryptographic processor emulator translates at least one of a status of the cryptographic processor operation or results of the cryptographic processor operation into response bytes (at operation 325).

At operation 330, the cryptographic processor emulator encrypts the response bytes into encrypted response bytes using the endorsement key. The cryptographic processor emulator, at operation 335, sends the encrypted response bytes to the cryptographic processor client via the buffer and over the physical bus connection.

These and other functions of the example method 300 are described in greater detail herein with respect to Figs. 1, 2A, 2B, and 4.

Fig. 4 depicts another example method 400 for implementing virtualization of discrete and migratable TPMs. In examples, the operations of example method 400 may be performed by an orchestrator in a control plane (e.g., orchestrator 150 in control plane 155 or orchestrator 235 in control plane 240 of Figs. 1 and 2A-2B).

In the example method 400 of Fig. 4, at operation 405, an orchestrator receives, from a requesting device (e.g., requesting device 170 of Fig. 1), a request to migrate secret data from a first TPM emulator that has been instantiated on a first PROT (e.g., cryptographic processor emulator 130a on the first PROT 105a of Fig. 1) to a second TPM emulator on a second PROT (e.g., cryptographic processor emulator 130b on the second PROT 105b of Fig. 1). The first PROT and the second PROT are each established either (i) on a motherboard on which a TPM client of a hypervisor-less bare metal node (e.g., cryptographic processor client 120a of bare metal node 110a of Fig. 1 or TPM client 205 of bare metal node 210 of Figs. 2A-2B) is running or (ii) on a BMC (e.g., BMC 145a or 145b of Fig. 1) that communicatively couples to at least one bare metal node. In some instances, the BMC is either a single-node BMC that communicatively couples to a single bare metal node or a dual-node BMC that communicatively couples to two bare metal nodes, at least one of which is a hypervisor-less bare metal node. Receiving the request (at operation 405) occurs after mutual trust has been established between the orchestrator and the first PROT. In examples, the first TPM emulator communicates with a first hypervisor-less bare metal node via a first buffer (e.g., buffer 125a or 215 of Fig. 1 or Figs. 2A-2B) and via a first physical bus connection between the first hypervisor-less bare metal node and the first buffer (e.g., bus 140a or 245 of Fig. 1 or 2A-2B). Similarly, the second cryptographic processor emulator communicates with a second hypervisor-less bare metal node via a second buffer (e.g., buffer 125b of Fig. 1) and via a second physical bus connection between the second hypervisor-less bare metal node and the second buffer (e.g., bus 140b of Fig. 1).

At operation 410, the orchestrator communicates with the first TPM emulator to request first secret data. In examples, the first secret data is stored in a first memory (e.g., memory 135a or 225 of Fig. 1 or 2A-2B) associated with the first TPM emulator. The orchestrator receives the first secret data from the first TPM emulator (at operation 415), and serializes the first secret data to produce serialized secret data (at operation 420). At operation 425, the orchestrator establishes the second PROT on a second node that is separate from the first node. The orchestrator instantiates the second TPM emulator on the second PROT based on the serialized secret data (at operation 430), and transfers the first secret data to a second memory associated with the second TPM emulator (at operation 435).

In examples, the orchestrator, at operation 440, causes generation of a second endorsement key using a key derivation function on the first endorsement seed, the second endorsement key being identical to the first endorsement key. In some examples, the second endorsement key is used as a primary encryption key when performing TPM operations on the second TPM emulator. At operation 445, the orchestrator instructs the first TPM emulator to delete the first secret data from the first memory. The orchestrator sends, to the requesting device, a status of migration from the first TPM emulator to the second TPM emulator (at operation 450).

These and other functions of the example method 300 are described in greater detail herein with respect to Figs. 1, 2A, 2B, and 3.

While the techniques and procedures in methods 300, 400 are depicted and/or described in a certain order for purposes of illustration, it should be appreciated that certain procedures may be reordered and/or omitted within the scope of various embodiments. Moreover, while the methods 300, 400 may be implemented by or with (and, in some cases, are described below with respect to) the systems, examples, or embodiments 100, 200A, and 200B of Figs. 1, 2A, and 2B, respectively (or components thereof), such methods may also be implemented using any suitable hardware (or software) implementation. Similarly, while each of the systems, examples, or embodiments 100, 200A, and 200B of Figs. 1, 2A, and 2B, respectively (or components thereof), can operate according to the methods 300, 400 (e.g., by executing instructions embodied on a computer readable medium), the systems, examples, or embodiments 100, 200A, and 200B of Figs. 1, 2A, and 2B can each also operate according to other modes of operation and/or perform other suitable procedures.

As should be appreciated from the foregoing, the present technology provides multiple technical benefits and solutions to technical problems. For instance, providing TPM functionality generally raises multiple technical problems. One technical problem arises with the use of non-VM, hypervisor-less nodes or servers, where a vTPM is not a viable option for implementing TPM functionality. In such cases, the existing options use a physical TPM (sometimes called discrete TPM or dTPM) or an fTPM, both of which are tied to the physical hardware (or rooted to the platform silicon), which makes migration of TPMs and secret data difficult, if not impossible. Another technical problem arises with respect to fTPMs in that use of fTPMs can lead to loss of associated secrets during updates of TPM firmware. TPMs in nonvolatile storage compounds issues because such TPMs are difficult to scrub secrets after migration.

The present technology for virtualizing discrete and migratable secure cryptographic processors (e.g., TPMs). In examples, a cryptographic processor emulator (e.g., TPM emulator) is implemented for a bare metal platform, on which no VM and no hypervisor are used, and is implemented without being tied to hardware (e.g., silicon components such as a motherboard). The present technology enables easy migration of secret data from one PROT to another PROT, where the secret data includes the cryptographic processor emulator, an endorsement seed associated with the cryptographic processor emulator, keys generated using or derived from the endorsement seed, and/or sealed secrets encrypted using one or more of the keys generated using or derived from the endorsement seed. The present technology also enables easy updates of cryptographic processor firmware (e.g., TPM firmware) without loss of associated secrets, as well as trivial scrubbing of secrets after migration, and migration of bare metal guests (e.g., cryptographic processor or TPM clients) to another bare metal node. In this manner, overall system security is maintained or improved, while enhancing reliability of the security functionalities provided by the cryptographic processor emulator or TPM emulator. For example, with ease of migration of secret data using the processes described herein, secret data can be transferred from one PROT to another PROT (e.g., when upgrading host machines), without loss of secrets during transfer or after scrubbing at the prior host machine (due to the cryptographic processor emulator or TPM emulator not being tied to hardware). Efficiency is also achieved for the migration process compared with physical TPM-based systems or fTPM-based systems, without the inherent issues with such systems.

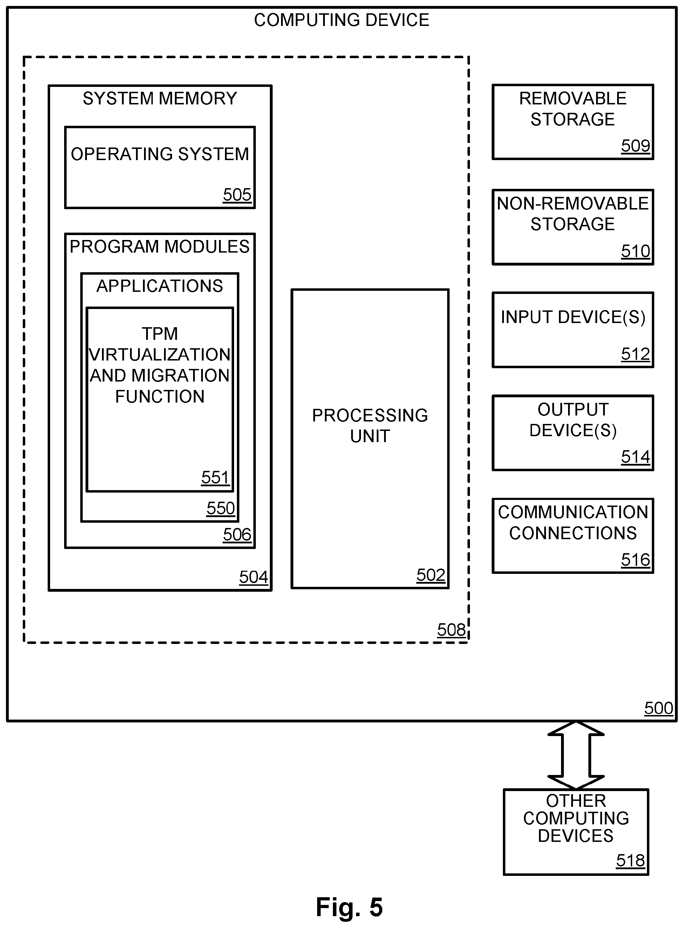

Fig. 5 depicts a block diagram illustrating physical components (i.e., hardware) of a computing device 500 with which examples of the present disclosure may be practiced. The computing device components described below may be suitable for a client device implementing the virtualization of discrete and migratable secure cryptographic processors (e.g., TPMs), as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as TPM virtualization and migration function 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Figs. 3 and 4, or one or more operations of the system(s) and/or apparatus(es) as described with respect to Figs. 1-2B, or the like. Other program modules that may be used in accordance with examples of the present disclosure may include applications such as electronic mail and contacts applications, word processing applications, spreadsheet applications, database applications, slide presentation applications, drawing or computer-aided application programs, artificial intelligence ("AI") applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include RAM, ROM, EEPROM, flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where n denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s, t, u*, *v, w, x, y,* and/or z) may similarly denote non-negative integer numbers that (together with n or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

Alternatively or in addition to the other examples described herein, examples include any combination of the following clauses:
Clause A. A system, comprising: an orchestrator that executes computer executable instructions that cause the orchestrator to perform operations comprising: after mutual trust has been established between the orchestrator and a first platform root of trust ("PROT"), receiving, from a requesting device, a request to migrate secret data from a first cryptographic processor emulator that has been instantiated on the first PROT to a second cryptographic processor emulator on a second PROT; communicating with the first cryptographic processor emulator to request first secret data that is stored in a first memory associated with the first cryptographic processor emulator; receiving the first secret data from the first cryptographic processor emulator; instantiating the second cryptographic processor emulator on the second PROT based on the first secret data; transferring the first secret data to a second memory associated with the second cryptographic processor emulator; instructing the first cryptographic processor emulator to delete the first secret data from the first memory; and sending, to the requesting device, a status of migration from the first cryptographic processor emulator to the second cryptographic processor emulator.
Clause B. The system of clause A, wherein the first cryptographic processor emulator communicates with a first hypervisor-less bare metal node via a first buffer and via a first physical bus connection between the first hypervisor-less bare metal node and the first buffer, wherein the second cryptographic processor emulator communicates with a second hypervisor-less bare metal node via a second buffer and via a second physical bus connection between the second hypervisor-less bare metal node and the second buffer.
Clause C. The system of clause B, wherein the first cryptographic processor emulator is a first trusted platform module ("TPM") emulator and the second cryptographic processor emulator is a second TPM emulator, wherein each of the first TPM emulator and the second TPM emulator provides TPM operations for the first hypervisor-less bare metal node and the second hypervisor-less bare metal node, respectively, wherein the first buffer and the second buffer stores encrypted command bytes corresponding to TPM commands that are sent by a first TPM client running on a first operating system ("OS") of the first hypervisor-less bare metal node and a second TPM client running on a second OS of the second hypervisor-less bare metal node, respectively, or encrypted response bytes corresponding to TPM responses that are sent by the first cryptographic processor emulator and the second cryptographic processor emulator, respectively.
Clause D. The system of clause C, wherein the TPM commands include commands to encrypt data or keys, commands decrypt data or keys, commands to extend a platform configuration register ("PCR"), or commands to store nonvolatile secrets, wherein the TPM responses include at least one of a status type of response or a result type of response, wherein the status type of response includes one of an indication of operation success, an indication of operation failure, or an indication of invalid command, wherein the result type of response includes results of a TPM operation corresponding to the TPM commands.
Clause E. The system of clause C or clause D, wherein the first secret data includes a first endorsement seed and sealed secrets, wherein the first endorsement seed is an entropy value that is used to generate a first endorsement key that is used as a primary encryption key when performing TPM operations on the first TPM emulator, wherein the first endorsement seed is injected into the first TPM emulator when the first TPM emulator is initially instantiated by the orchestrator, wherein the sealed secrets are encrypted using a key derived from the first endorsement seed, wherein the first secret data further includes the first endorsement key and the key used to encrypt the sealed secrets.
Clause F. The system of clause E, wherein the operations further comprise: after transferring the first secret data to the second memory, causing generation of a second endorsement key using a key derivation function on the first endorsement seed, the second endorsement key being identical to the first endorsement key, the second endorsement key being used as a primary encryption key when performing TPM operations on the second TPM emulator.
Clause G. The system of any of clauses C to F, wherein the first PROT is established on one of: a motherboard on which the first TPM client of the first hypervisor-less bare metal node is running; a single-node baseboard management controller ("BMC") that communicatively couples to a single bare metal node, the single bare metal node being the first hypervisor-less bare metal node; or a dual-node BMC that communicatively couples to two bare metal nodes, one of which is the first hypervisor-less bare metal node.
Clause H. The system of any preceding clause, wherein the first PROT is established on a first node, wherein the operations further comprise: serializing the first secret data to produce serialized secret data; and establishing the second PROT on a second node that is separate from the first node; wherein instantiating the second cryptographic processor emulator on the second PROT is based on the serialized secret data.
Clause I. A computer-implemented method, comprising: receiving, by a first trusted platform module ("TPM") emulator and from a first buffer, encrypted command bytes that are sent by a first TPM client running on a first operating system ("OS") of a first hypervisor-less bare metal node over a first physical bus connection between the first hypervisor-less bare metal node and the first buffer, wherein the first TPM emulator and the first buffer are established on a first platform root of trust ("PROT"); decrypting, by the first TPM emulator, the encrypted command bytes to produce decrypted command bytes using a first endorsement key corresponding to the first TPM emulator; translating, by the first TPM emulator, the decrypted command bytes into TPM commands; performing, by the first TPM emulator, a TPM operation using the first endorsement key, based on the TPM commands; translating, by the first TPM emulator, at least one of a status of the TPM operation or results of the TPM operation into response bytes; encrypting, by the first TPM emulator, the response bytes into encrypted response bytes using the first endorsement key; and sending, by the first TPM emulator, the encrypted response bytes to the first TPM client via the first buffer and over the first physical bus connection.
Clause J. The computer-implemented method of clause I, wherein the TPM commands include commands to encrypt data or keys, commands decrypt data or keys, commands to extend a platform configuration register ("PCR"), or commands to store nonvolatile secrets.
Clause K. The computer-implemented method of clause I or clause J, wherein the status of the TPM operation includes one of an indication of operation success, an indication of operation failure, or an indication of invalid command.
Clause L. The computer-implemented method of any of clauses I to K, wherein the first endorsement key is generated using a first endorsement seed corresponding to the first TPM emulator, the first endorsement seed being an entropy value, the first endorsement key being used as a primary encryption key when performing TPM operations on the first TPM emulator, wherein the first endorsement seed is injected into the first TPM emulator when the first TPM emulator is initially instantiated by an orchestrator in a control plane.
Clause M. The computer-implemented method of clause L, further comprising: receiving, by the first TPM emulator, a request to send secret data to the orchestrator in the control plane, after mutual trust has been established between the orchestrator and the first PROT; encrypting, by the first TPM emulator, the first endorsement seed to generate first secret data; sending, by the first TPM emulator, the first secret data to the orchestrator; receiving, by the first TPM emulator, instructions to delete the secret data from a first memory of the first TPM emulator, after a successful migration operation by the orchestrator in which a second TPM emulator has been instantiated on a second PROT that is separate from the first PROT and the first secret data has been transferred to a second memory of the second TPM emulator; deleting, by the first TPM emulator, the first endorsement seed from the first memory; and sending, by the first TPM emulator, a response to the instructions to the orchestrator.
Clause N. The computer-implemented method of any of clauses I to M, wherein the first PROT is established on one of: a motherboard on which the first TPM client of the first hypervisor-less bare metal node is running; a single-node baseboard management controller ("BMC") that communicatively couples to a single bare metal node, the single bare metal node being the first hypervisor-less bare metal node; or a dual-node BMC that communicatively couples to two bare metal nodes, one of which is the first hypervisor-less bare metal node.
Clause O. A system, comprising: a first hypervisor-less bare metal node; a first platform root of trust ("PROT"); a first buffer that has been established on the first PROT; a first physical bus connection between the first hypervisor-less bare metal node and the first buffer; and a first cryptographic processor emulator that has been instantiated on the first PROT, the first cryptographic processor emulator executing computer executable instructions that cause the first cryptographic processor emulator to perform first operations comprising: receiving, from the first buffer, encrypted command bytes that are sent by a first cryptographic processor client running on a first operating system ("OS") of the first hypervisor-less bare metal node over the first physical bus connection; decrypting the encrypted command bytes to produce decrypted command bytes using a first endorsement key corresponding to the first cryptographic processor emulator; translating the decrypted command bytes into cryptographic processor commands; performing a cryptographic processor operation using the first endorsement key, based on the cryptographic processor commands; translating at least one of a status of the cryptographic processor operation or results of the cryptographic processor operation into response bytes; encrypting the response bytes into encrypted response bytes using the first endorsement key; and sending the encrypted response bytes to the first cryptographic processor client via the first buffer and over the first physical bus connection.
Clause P. The system of clause O, wherein the first cryptographic processor emulator is a first trusted platform module ("TPM") emulator, wherein the first cryptographic processor client is a first TPM client, wherein the cryptographic processor commands are TPM commands, wherein the cryptographic processor operation is a TPM operation.
Clause Q. The system of clause P, wherein the TPM commands include commands to encrypt data or keys, commands decrypt data or keys, commands to extend a platform configuration register ("PCR"), or commands to store nonvolatile secrets, wherein the status of the TPM operation includes one of an indication of operation success, an indication of operation failure, or an indication of invalid command.
Clause R. The system of clause P or clause Q, wherein the first endorsement key is generated using a first endorsement seed corresponding to the first TPM emulator, the first endorsement seed being an entropy value, the first endorsement key being used as a primary encryption key when performing TPM operations on the first TPM emulator, wherein the first endorsement seed is injected into the first TPM emulator when the first TPM emulator is initially instantiated by an orchestrator in a control plane.
Clause S. The system of any of clauses P to R, wherein the first PROT is established on a first node, wherein the system further comprises: an orchestrator that executes computer executable instructions that cause the orchestrator to perform second operations comprising: after mutual trust has been established between the orchestrator and the first PROT, receiving a request, from a requesting device, to migrate secret data from the first TPM emulator that has been instantiated on the first PROT established on the first node to a second TPM emulator on a second PROT; communicating with the first TPM emulator to request first secret data that is stored in a first memory associated with the first TPM emulator; receiving the first secret data from the first TPM emulator; serializing the first secret data to produce serialized secret data; establishing the second PROT on a second node that is separate from the first node; instantiating the second TPM emulator on the second PROT based on the serialized secret data; transferring the first secret data to a second memory associated with the second TPM emulator; instructing the first TPM emulator to delete the first secret data from the first memory; and sending, to the requesting device, a status of migration from the first TPM emulator to the second TPM emulator.
Clause T. The system of clause S, wherein the first secret data includes a first endorsement seed, wherein the second operations further comprise: after transferring the first secret data to the second memory, causing generation of a second endorsement key using a key derivation function on the first endorsement seed, the second endorsement key being identical to the first endorsement key, the second endorsement key being used as a primary encryption key when performing TPM operations on the second TPM emulator.

## Claims

1. A system (100), comprising:
an orchestrator (150) that executes computer executable instructions that cause the orchestrator to perform operations comprising:
after mutual trust has been established between the orchestrator and a first platform root of trust "PROT", receiving (405), from a requesting device, a request to migrate secret data from a first cryptographic processor emulator that has been instantiated on the first PROT to a second cryptographic processor emulator on a second PROT;
communicating (410) with the first cryptographic processor emulator to request first secret data that is stored in a first memory associated with the first cryptographic processor emulator;
receiving (415) the first secret data from the first cryptographic processor emulator;
instantiating (430) the second cryptographic processor emulator on the second PROT based on the first secret data;
transferring (435) the first secret data to a second memory associated with the second cryptographic processor emulator;
instructing (445) the first cryptographic processor emulator to delete the first secret data from the first memory; and
sending (450), to the requesting device, a status of migration from the first cryptographic processor emulator to the second cryptographic processor emulator.

2. The system of claim 1, wherein the first cryptographic processor emulator communicates with a first hypervisor-less bare metal node via a first buffer and via a first physical bus connection between the first hypervisor-less bare metal node and the first buffer, wherein the second cryptographic processor emulator communicates with a second hypervisor-less bare metal node via a second buffer and via a second physical bus connection between the second hypervisor-less bare metal node and the second buffer.

3. The system of claim 2, wherein the first cryptographic processor emulator is a first trusted platform module "TPM" emulator and the second cryptographic processor emulator is a second TPM emulator, wherein each of the first TPM emulator and the second TPM emulator provides TPM operations for the first hypervisor-less bare metal node and the second hypervisor-less bare metal node, respectively, wherein the first buffer and the second buffer stores encrypted command bytes corresponding to TPM commands that are sent by a first TPM client running on a first operating system "OS" of the first hypervisor-less bare metal node and a second TPM client running on a second OS of the second hypervisor-less bare metal node, respectively, or encrypted response bytes corresponding to TPM responses that are sent by the first cryptographic processor emulator and the second cryptographic processor emulator, respectively.

4. The system of claim 3, wherein the TPM commands include commands to encrypt data or keys, commands decrypt data or keys, commands to extend a platform configuration register "PCR", or commands to store nonvolatile secrets, wherein the TPM responses include at least one of a status type of response or a result type of response, wherein the status type of response includes one of an indication of operation success, an indication of operation failure, or an indication of invalid command, wherein the result type of response includes results of a TPM operation corresponding to the TPM commands.

5. The system of claim 3 or claim 4, wherein the first secret data includes a first endorsement seed and sealed secrets, wherein the first endorsement seed is an entropy value that is used to generate a first endorsement key that is used as a primary encryption key when performing TPM operations on the first TPM emulator, wherein the first endorsement seed is injected into the first TPM emulator when the first TPM emulator is initially instantiated by the orchestrator, wherein the sealed secrets are encrypted using a key derived from the first endorsement seed, wherein the first secret data further includes the first endorsement key and the key used to encrypt the sealed secrets.

6. The system of claim 5, wherein the operations further comprise:
after transferring the first secret data to the second memory, causing generation of a second endorsement key using a key derivation function on the first endorsement seed, the second endorsement key being identical to the first endorsement key, the second endorsement key being used as a primary encryption key when performing TPM operations on the second TPM emulator.

7. The system of any of claims 3 to 6, wherein the first PROT is established on one of:
a motherboard on which the first TPM client of the first hypervisor-less bare metal node is running;
a single-node baseboard management controller "BMC" that communicatively couples to a single bare metal node, the single bare metal node being the first hypervisor-less bare metal node; or
a dual-node BMC that communicatively couples to two bare metal nodes, one of which is the first hypervisor-less bare metal node.

8. The system of any preceding claim, wherein the first PROT is established on a first node, wherein the operations further comprise:
serializing the first secret data to produce serialized secret data; and
establishing the second PROT on a second node that is separate from the first node;
wherein instantiating the second cryptographic processor emulator on the second PROT is based on the serialized secret data.

9. A computer-implemented method (300), comprising:
receiving (305), by a first trusted platform module "TPM" emulator and from a first buffer, encrypted command bytes that are sent by a first TPM client running on a first operating system "OS" of a first hypervisor-less bare metal node over a first physical bus connection between the first hypervisor-less bare metal node and the first buffer, wherein the first TPM emulator and the first buffer are established on a first platform root of trust "PROT";
decrypting (310), by the first TPM emulator, the encrypted command bytes to produce decrypted command bytes using a first endorsement key corresponding to the first TPM emulator;
translating (315), by the first TPM emulator, the decrypted command bytes into TPM commands;
performing (320), by the first TPM emulator, a TPM operation using the first endorsement key, based on the TPM commands;
translating (325), by the first TPM emulator, at least one of a status of the TPM operation or results of the TPM operation into response bytes;
encrypting (330), by the first TPM emulator, the response bytes into encrypted response bytes using the first endorsement key; and
sending (335), by the first TPM emulator, the encrypted response bytes to the first TPM client via the first buffer and over the first physical bus connection.

10. The computer-implemented method of claim 9, wherein the TPM commands include commands to encrypt data or keys, commands decrypt data or keys, commands to extend a platform configuration register "PCR", or commands to store nonvolatile secrets.

11. The computer-implemented method of claim 9 or claim 10, wherein the status of the TPM operation includes one of an indication of operation success, an indication of operation failure, or an indication of invalid command.

12. The computer-implemented method of any of claims 9 to 11, wherein the first endorsement key is generated using a first endorsement seed corresponding to the first TPM emulator, the first endorsement seed being an entropy value, the first endorsement key being used as a primary encryption key when performing TPM operations on the first TPM emulator, wherein the first endorsement seed is injected into the first TPM emulator when the first TPM emulator is initially instantiated by an orchestrator in a control plane.

13. The computer-implemented method of claim 12, further comprising:
receiving, by the first TPM emulator, a request to send secret data to the orchestrator in the control plane, after mutual trust has been established between the orchestrator and the first PROT;
encrypting, by the first TPM emulator, the first endorsement seed to generate first secret data;
sending, by the first TPM emulator, the first secret data to the orchestrator;
receiving, by the first TPM emulator, instructions to delete the secret data from a first memory of the first TPM emulator, after a successful migration operation by the orchestrator in which a second TPM emulator has been instantiated on a second PROT that is separate from the first PROT and the first secret data has been transferred to a second memory of the second TPM emulator;
deleting, by the first TPM emulator, the first endorsement seed from the first memory; and
sending, by the first TPM emulator, a response to the instructions to the orchestrator.

14. The computer-implemented method of any of claims 9 to 13, wherein the first PROT is established on one of:
a motherboard on which the first TPM client of the first hypervisor-less bare metal node is running;
a single-node baseboard management controller "BMC" that communicatively couples to a single bare metal node, the single bare metal node being the first hypervisor-less bare metal node; or
a dual-node BMC that communicatively couples to two bare metal nodes, one of which is the first hypervisor-less bare metal node.

15. A system (100), comprising:
a first hypervisor-less bare metal node (210);
a first platform root of trust "PROT" (230);
a first buffer (215) that has been established on the first PROT;
a first physical bus connection (245) between the first hypervisor-less bare metal node and the first buffer; and
a first cryptographic processor emulator (220) that has been instantiated on the first PROT, the first cryptographic processor emulator executing computer executable instructions that cause the first cryptographic processor emulator to perform first operations comprising:
receiving (305), from the first buffer, encrypted command bytes that are sent by a first cryptographic processor client running on a first operating system "OS" of the first hypervisor-less bare metal node over the first physical bus connection;
decrypting (310) the encrypted command bytes to produce decrypted command bytes using a first endorsement key corresponding to the first cryptographic processor emulator;
translating (315) the decrypted command bytes into cryptographic processor commands;
performing (320) a cryptographic processor operation using the first endorsement key, based on the cryptographic processor commands;
translating (325) at least one of a status of the cryptographic processor operation or results of the cryptographic processor operation into response bytes;
encrypting (330) the response bytes into encrypted response bytes using the first endorsement key; and
sending (335) the encrypted response bytes to the first cryptographic processor client via the first buffer and over the first physical bus connection.
